(19) Europäisches Patentamt / European Patent Office / Office européen des brevets

(11) **EP 1 829 031 B1**

(12) **FASCICULE DE BREVET EUROPEEN**

(45) Date de publication et mention
de la délivrance du brevet:
**17.12.2008 Bulletin 2008/51**

(21) Numéro de dépôt: **05850557.9**

(22) Date de dépôt: **20.12.2005**

(51) Int Cl.:
*G11B 7/0065* (2006.01)     *G11B 7/24* (2006.01)

(86) Numéro de dépôt international:
**PCT/FR2005/003208**

(87) Numéro de publication internationale:
**WO 2006/067331 (29.06.2006 Gazette 2006/26)**

(54) **MEMOIRE HOLOGRAPHIQUE A DETECTION HOMODYNE**

HOLOGRAPHISCHES SPEICHERN MIT HOMODYNDETEKTION

HOLOGRAPHIC STORAGE WITH HOMODYNE DETECTION

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **20.12.2004 FR 0453091**

(43) Date de publication de la demande:
**05.09.2007 Bulletin 2007/36**

(73) Titulaires:
- **CENTRE NATIONAL DE LA RECHERCHE SCIENTIFIQUE (CNRS)**
  **75794 Paris Cedex 16 (FR)**
- **UNIVERSITE DE PARIS-SUD**
  **91405 Orsay (FR)**

(72) Inventeurs:
- **PAULIAT, Gilles**
  **F-91940 Les Ulis (FR)**
- **MAIRE, Guillaume**
  **F-88000 Epinal (FR)**
- **ROOSEN, Gérald**
  **F-78720 La Celle les Bordes (FR)**

(74) Mandataire: **Bredema**
**38, avenue de l'Opéra**
**F-75002 Paris (FR)**

(56) Documents cités:
EP-A- 1 324 322      EP-B- 0 827 621
US-A1- 2002 150 022      US-A1- 2003 165 746

EP 1 829 031 B1

**Description**

La présente invention concerne le domaine des mémoires holographiques.

La présente invention concerne plus particulièrement le domaine des mémoires holographiques appliquées au stockage bit à bit de l'information.

Pour de nombreuses applications, la capacité des mémoires optiques actuelles (CD, DVD, ou même blu-ray) se révèle très insuffisante. Différentes recherches sont donc menées pour atteindre des capacités de stockage de l'ordre du Teraoctet, alors que les disques actuels permettent au mieux 50 Go.

À ce titre, l'art antérieur connaît déjà des mémoires de masse optiques utilisant le principe de l'holographie. Ce principe possède le grand avantage de permettre un stockage volumique des données au lieu du simple stockage surfacique (ou éventuellement multi-surfacique) des disques classiques de type DVD. En particulier, le brevet européen EP 0 827 621 décrit une mémoire de masse optique comportant une couche photosensible à cellules élémentaires constituées par un tronçon de guide de lumière de type fibre optique. Ces fibres stockent alors une structure de Lippmann constituant un interférogramme de données codées dans les longueurs d'onde d'un faisceau lumineux.

Selon ce document d'art antérieur illustré figure 1, lors de l'écriture des données, la lumière pénètre dans la fibre, traverse un substrat transparent et atteint un miroir qui renvoie la lumière dans la fibre. Le matériau photosensible de la fibre est alors soumis à l'action de deux faisceaux se propageant en sens inverse. Les interférences entre ces deux faisceaux provoquent alors des ondes stationnaires qui inscrivent dans le matériau photosensible de la fibre une superposition de stratification d'indice de réfraction selon l'effet Lippmann.

Lors de la lecture des données, le miroir est masqué et le laser émet un spectre continu. Certaines longueurs d'onde sont alors réfléchies vers le laser et le détecteur par la structure de Lippmann. La détection de cette structure indique donc la présence d'un bit d'information. En multiplexant différentes longueurs d'onde au sein des fibres, il est alors possible d'obtenir un stockage de plusieurs bits d'information en volume.

On comprendra bien l'inconvénient de cet art antérieur dans le fait de devoir ôter ou masquer le miroir au moment de la lecture afin de pouvoir lire les interférences. Le problème technique que propose de résoudre la présente invention est donc celui de la lecture ou de la détection des interférences dans une mémoire de masse holographique.

Elle entend pour cela faciliter la détection en utilisant un miroir réfléchissant à la fois en lecture et en écriture et en réalisant une détection homodyne des faisceaux lors de la lecture.

L'art antérieur connaît également la demande de brevet américaine US 2002/150022 (Tolmachev). Ce document concerne l'emploi d'impulsions ultracourtes pour enregistrer des informations dans à une profondeur déterminée dans l'épaisseur du matériau. Le retard entre deux impulsions contre-propageantes définit la profondeur d'enregistrement. Des interférences y sont utilisées lors du processus d'enregistrement des informations mais jamais lors du procédé de lecture des informations. Dans le système décrit, un miroir est présent sous un milieu photosensible. Ce miroir (avec la lame quart d'onde) possède des propriétés de polarisation pour éviter de mélanger le faisceau réfléchi par ce miroir avec les mêmes faisceaux qui codent les données relues.

L'art antérieur connaît également la demandes US 2003/165746 (Stadler) concernant la structure d'un support d'enregistrement et un procédé d'écriture de données sur ce support.

L'art antérieur connaît également la demande EP 1 324 322 (Optware), qui divulgue le fait que, lors de l'écriture, un faisceau de référence réfléchi par un miroir est envoyé dans une direction différente de celle du signal reconstruit.

Aucun de ces documents ne décrit d'étape de lecture de données par détection homodyne.

La présente invention se rapporte à un procédé selon la revendication 1.

Avantageusement, ladite détection homodyne est réalisée de façon différentielle en utilisant le signal réfléchi et le signal transmis.

Avantageusement, une lame de phase biréfringente placée entre le milieu holographique et le miroir permet d'optimiser le point de fonctionnement de ladite détection homodyne grâce à un changement de la polarisation du faisceau de lecture par rapport à la polarisation du faisceau d'écriture.

Avantageusement, une lame de phase biréfringente placée entre le milieu holographique et le miroir permet, par un changement de polarisation du faisceau de lecture par rapport à la polarisation du faisceau d'écriture, de réaliser ladite détection de façon différentielle entre les deux composantes de polarisation des faisceaux transmis et/ou réfléchis.

L'invention concerne également une mémoire de masse comprenant au moins un matériau holographique pour l'inscription de données bit à bit par génération d'un hologramme, et comprenant au moins une couche réfléchissante, caractérisée en ce que ladite couche réfléchissante réfléchit les signaux de lecture lors des phases de lecture des données enregistrées.

De préférence, elle comprend en outre une lame de phase ajustant les signaux réfléchis et transmis selon leurs polarisations.

Selon un premier mode de réalisation, les données sont enregistrées dans des microfibres orientées de façon sensiblement perpendiculaire à la face d'enregistrement.

Selon un autre mode de réalisation, les données sont enregistrées dans des disques de Lippmann par des faisceaux se propageant de façon sensiblement perpendiculaire à la face d'enregistrement.

L'invention concerne également un disque optique pour l'enregistrement de données, caractérisé en ce qu'il constitue une mémoire de masse selon l'invention.

L'invention concerne enfin un support d'enregistrement pour l'enregistrement de données caractérisé en ce qu'il constitue une mémoire de masse selon l'invention.

On comprendra mieux l'invention au regard des figures ci-dessous données à titre illustratif où :

- la figure 1 illustre un procédé de lecture d'informations enregistrées sous la forme d'un hologramme selon l'art antérieur ;
- la figure 2 illustre le procédé de lecture selon l'invention ;
- la figure 3 illustre le calcul du signal détecté par une détection homodyne selon l'invention ;
- la figure 4 représente le signal obtenu pour un enregistrement dans un matériau purement non local ;
- la figure 5 représente le signal obtenu pour un enregistrement dans un matériau purement local ;
- la figure 6 illustre un enregistrement bit à bit dans des disques de Lippmann.

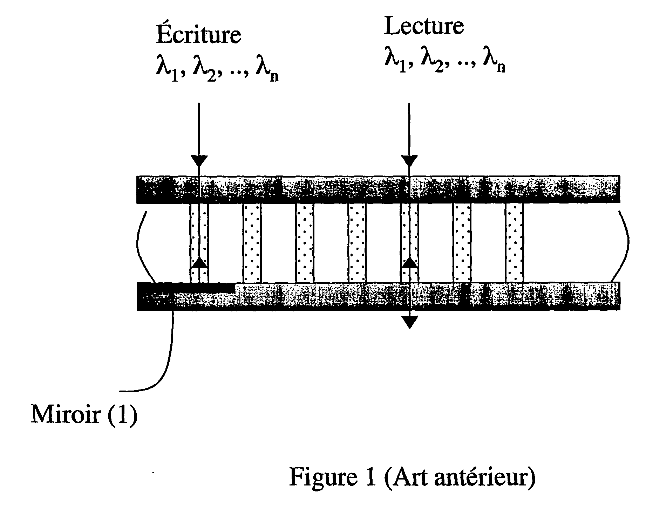

Illustré figure 1, selon l'art antérieur, les bits sont enregistrés un par un, sous la forme d'un réseau de Bragg, par des faisceaux contre-propageants. Si le bit correspondant est à 1, un réseau est enregistré, alors qu'il ne l'est pas s'il est à 0. Plusieurs bits sont alors stockés au même endroit par multiplexage en longueur d'onde, soit en exposant successivement à chacune des longueurs d'onde, soit en simultané par une exposition à toutes les longueurs d'onde. L'opération est ensuite répétée à une autre position pour couvrir l'ensemble du disque.

Les données sont restituées par diffraction de Bragg : pour une position donnée et une longueur d'onde donnée, un signal diffracté signifie que le bit correspondant est à 1. La relecture peut également s'effectuer avec un spectre large, tous les bits d'un même emplacement étant restitués simultanément. Sur la figure 1, le second faisceau d'écriture est créé par réflexion du premier faisceau sur un miroir 1. Afin de lire les données, le miroir est enlevé et on lit les données en détectant le faisceau réfléchi par le réseau.

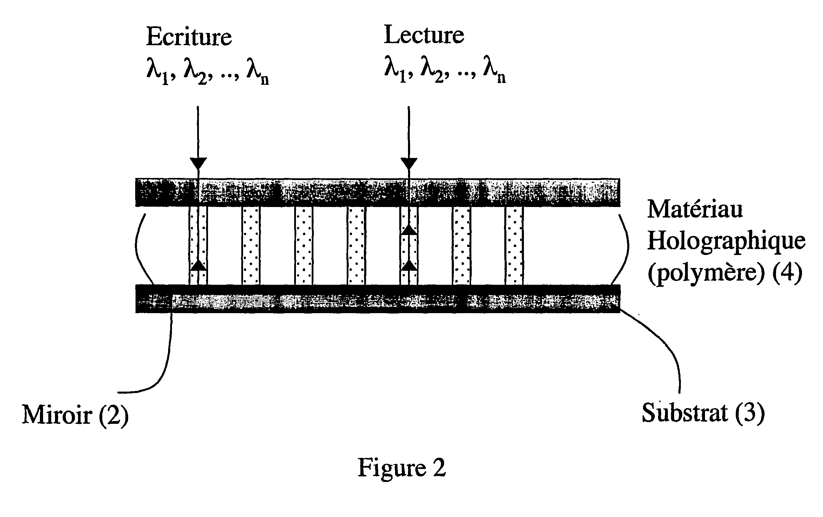

Sur la figure 2 et selon l'invention, un miroir 2 est positionné de façon fixe au niveau du substrat 3 de la mémoire de masse par exemple sous la forme d'une lame de verre. Celui-ci n'est pas retiré ou masqué lors de la lecture des données.

Dans ce cas, lors de la restitution, le signal diffracté se superpose de façon cohérente au signal réfléchi par le miroir. Si la réflectivité du miroir n'est pas de 100 %, et/ou, si le matériau holographique 4 est absorbant, la présence d'un bit à 1 se traduit par une modification de la réflectivité de la structure en fonction de la longueur d'onde. Selon l'invention, on effectue alors une détection homodyne pour reconnaître ce bit.

L'hologramme peut être un hologramme de phase et/ou d'absorption.

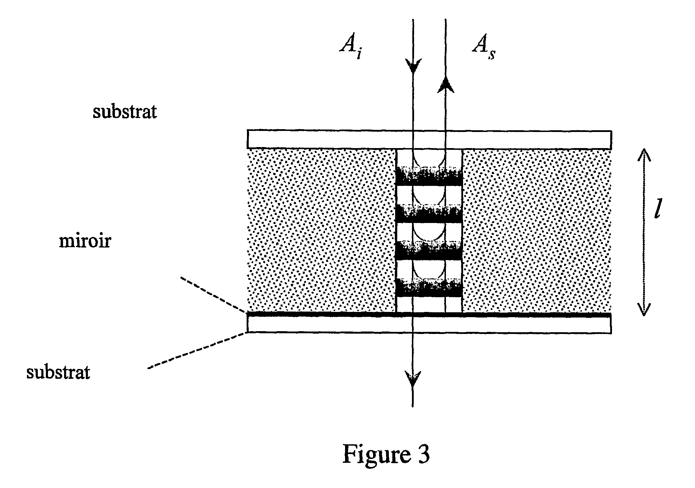

La figure 3 permet de comprendre l'intensité obtenue dans le cas d'une détection homodyne.

Les notations suivantes sont utilisées:

$r$ : réflectivité en amplitude du miroir

$k_m$ : nombre d'onde à la longueur d'onde d'enregistrement du réseau n° m

$k$ et $\omega$ : nombre d'onde et pulsation à la longueur d'onde de lecture

$\delta n_{max}$ : variation maximale d'indice du matériau

$N$ : nombre de réseaux enregistrés

$\varphi$ : déphasage entre réseau d'indice et figure d'interférences

$l$ : épaisseur du milieu holographique

$A_i$ : amplitude incidente

À titre d'illustration dans le cas d'un hologramme de phase de faible efficacité de diffraction, et pour des réflectivités r faibles, l'amplitude $A_s$ détectée en détection homodyne comme sur la figure 3 est donc:

$$A_s = A_i e^{2ikl}\left(r + i\sum_{m=1}^{N} b_m \frac{\omega}{2c} \frac{\delta n_{max}}{N} \frac{2r}{1+r^2} l e^{-i(k-k_m)l - i\varphi} \operatorname{sinc}\left((k-k_m)l\right)\right)$$

où les coefficients $b_m$ valent 1 ou 0 suivant que le bit du réseau correspondant est à 1 ou 0, et où le premier terme de la somme correspond à la partie du signal réfléchie, et le second à la partie diffractée.

Selon le type de matériau utilisé, l'intensité obtenue variera selon la valeur du paramètre $\varphi$. Il convient tout particulièrement de noter que l'intensité du signal obtenu décroît ici en 1/N pour une détection homodyne, alors qu'elle décroissait en $1/N^2$ dans les détections connues pour les mémoires holographiques.

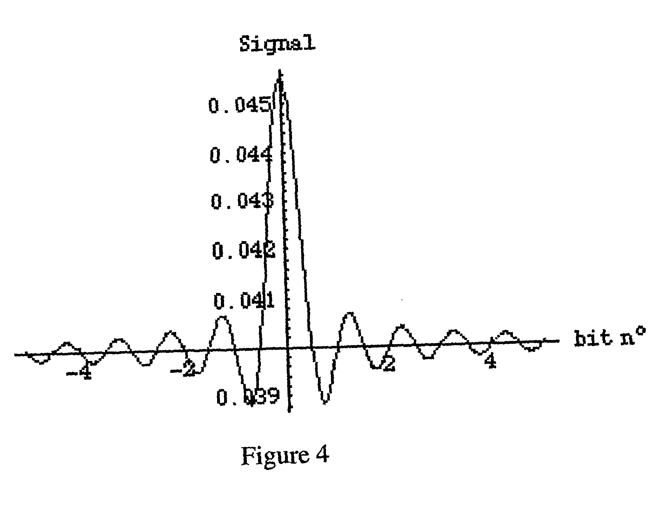

Ainsi, pour un matériau holographique purement non local, par exemple pour un cristal photoréfractif fonctionnant en régime de diffusion, le réseau d'indice est décalé d'un quart de frange par rapport à la figure d'interférence ayant servi à l'inscription ($\varphi$=+p/2 ou -p/2). Pour la longueur d'onde ayant servi à l'enregistrement, le faisceau diffracté interfère donc constructivement ou destructivement avec le faisceau réfléchi. L'intensité du signal obtenu est donc telle qu'illustrée figure 4 en fonction du numéro du bit ou bien de la différence de nombres d'onde $k-k_m$.

Le signal détecté présente un maximum (respectivement minimum) pour la longueur d'onde de Bragg signalant que le bit correspondant est au niveau 1. Il convient par ailleurs de noter que le signal transmis présente une variation opposée, avec un minimum (respectivement maximum) pour la longueur d'onde de Bragg, ce qui permet également une détection homodyne en transmission.

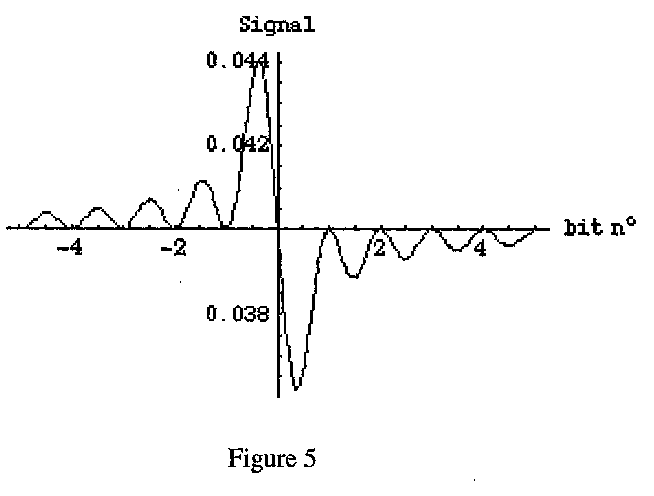

Pour un matériau possédant une réponse locale, le réseau d'indice est en phase, ou en opposition de phase, avec la figure d'interférence ayant servi à l'enregistrement ($\varphi$= 0 ou p). Dans ce cas, le signal détecté par détection homodyne ne présente plus de maximum (ni de minimum) pour la longueur d'onde de Bragg. Ce signal est illustré figure 5.

Dans ce cas, la détection est envisageable, mais l'on préfère remettre artificiellement le signal diffracté en phase avec le signal réfléchi par l'intermédiaire d'une lame $\lambda$/8 disposée entre le matériau holographique et le miroir. L'écriture s'effectue alors par exemple avec la polarisation linéaire du faisceau suivant un axe de cette lame de sorte que le faisceau réfléchi ait la même polarisation. En tournant la polarisation de $\pi$/2 entre la lecture et l'écriture, on introduit alors un déphasage correcteur sur le faisceau réfléchi. Pour la longueur d'onde de Bragg, on retrouve donc le signal tel qu'illustré figure 4.

Afin d'améliorer la précision de la détection, on peut par ailleurs effectuer une détection différentielle entre le faisceau transmis et le faisceau réfléchi. En effet, la variation du signal transmis par le miroir dont la réflectivité n'est pas 100% est opposée à celle du signal réfléchi par la structure. La détection homodyne peut donc s'effectuer, comme on l'a déjà vu, soit sur le signal transmis, soit sur le signal réfléchi. En effectuant une détection différentielle entre ces deux signaux, on s'affranchit des fluctuations de puissance dues à la source ou à des poussières. Les variations du signal différentiel ne sont donc dues qu'à l'hologramme.

Selon un mode de réalisation, cette détection est effectuée d'un seul coté du miroir en détectant les deux composantes de polarisation et en introduisant une lame de phase pour déphaser une des composantes de polarisation réfléchie et pas l'autre. L'écriture s'effectue dans ce cas avec la polarisation suivant une ligne neutre de la lame. Lors de la lecture, la polarisation est alignée à 45° des lignes neutres. Les deux composantes réfléchies sont alors en quadrature l'une par rapport à l'autre.

Nous décrivons maintenant plus précisément les matériaux utilisés pour l'enregistrement par mémoire holographique.

Selon un premier mode de mise en oeuvre, les bits sont enregistrés un à un dans des microfibres telles que présentées dans le brevet EP 0 827 621. Ces fibres ont l'avantage de guider la lumière lors de l'enregistrement, et la capacité d'enregistrement de la microfibre est alors proportionnelle à sa longueur.

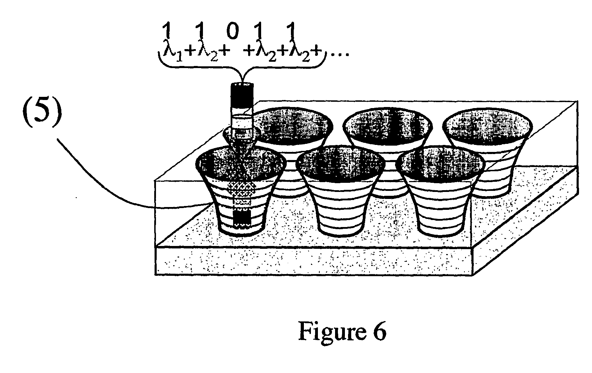

Selon un second mode de mise en oeuvre, illustré figure 6, les bits sont enregistrés dans des disques de Lippmann 5 en photopolymère. L'enregistrement et la lecture se font dans ce cas comme avec des microfibres. Toutefois, on focalise le faisceau qui reste peu divergent sur l'épaisseur du matériau afin de multiplexer un maximum de longueurs d'onde sur une surface la plus petite possible, l'épaisseur du matériau devant être de l'ordre de la longueur de Rayleigh du faisceau.

Bien que l'invention ait été décrite par des exemples en référence aux figures d'accompagnement, il est entendu que de nombreuses modifications peuvent venir à l'esprit de l'homme du métier sans pour autant sortir de la portée de la présente invention.

**Revendications**

1. Procédé de lecture de données enregistrées dans un matériau holographique (4) sous la forme d'un hologramme obtenu par interférence de deux rayons sensiblement de même longueur d'onde, et utilisant au moins une couche réfléchlssante (2), le procédé comprenant une etape consistant à

   - émettre une lumière comportant au moins ladite longueur d'onde au niveau dudit matériau holographique comprenant ledit hologramme,
   le procédé étant **caractérisé en ce qu'**il comprend une étape consistant à:
   - effectuer une détection homodyne entre le signal issu de ladite lumière diffractée par ledit hologramme et au moins un signal choisi parmi le signal réfléchi et le signal transmis par ladite au moins une couche réfléchissante.

2. Procédé de lecture de données enregistrées dans un matériau holographique selon la revendication 1, dans lequel ladite détection homodyne est réalisée de façon différentielle en utilisant le signal réfléchi et le signal transmis.

**3.** Procédé de lecture de données enregistrées dans un matériau holographique selon la revendication 1, dans lequel une lame de phase biréfringente placée entre le milieu holographique et le miroir permet d'optimiser le point de fonctionnement de ladite détection homodyne grâce à un changement de polarisation du faisceau de lecture par rapport à la polarisation du faisceau d'écriture.

**4.** Procédé de lecture de données enregistrées dans un matériau holographique selon la revendication 1, dans lequel une lame de phase biréfringente placée entre le milieu holographique et le miroir permet, par un changement de polarisation du faisceau de lecture par rapport à la polarisation du faisceau d'écriture, de réaliser ladite détection homodyne de façon différentielle entre les deux composantes de polarisation des faisceaux transmis et/ou réfléchis.

**Claims**

**1.** A method for reading data recorded in a holographic material (4) in the form of a hologram obtained by the interference of two beams having substantially the same wavelength and using at least one reflecting layer (2), the method comprising the following step:

- emitting a light including at least said wavelength at the level of said holographic material comprising said hologram,
the method being **characterized in that** it comprises the following step:
- carrying out a homodyne detection between the signal emitted by said light diffracted by said hologram and at least a signal selected among the signal reflected and the signal transmitted by said at least one reflecting layer.

**2.** A method for reading data recorded in a holographic material according to claim 1, wherein said homodyne detection is carried out differentially by using the reflected signal and the transmitted signal.

**3.** A method for reading data recorded in a holographic material according to claim 1, wherein a birefringent plate positioned between the holographic medium and the mirror makes it possible to optimize the operation point of said homodyne detection thanks to a change in the polarization of the reading beam with respect to the polarization of the writing beam.

**4.** A method for reading data recorded in a holographic material according to claim 1, wherein a birefringent plate positioned between the holographic medium and the mirror makes it possible to differentially carry out said homodyne detection between the two polarization components of the transmitted and/or reflected beams, by changing the polarization of the reading beam with respect to the polarization of the writing beam.

**Patentansprüche**

**1.** Leseverfahren von in einem holographischen Material (4) in Form eines Hologramms gespeicherten Daten, das durch die Interferenz zweier Strahlen von etwa gleicher Wellenlänge erhalten wird, und das mindestens eine abstrahlende Schicht (2) verwendet, wobei das Verfahren den folgenden Schritt umfasst:

- Abgabe einen Lichts, das mindestens die genannte Wellenlänge im Bereich des genannten holographischen Materials aufweist, das das genannte Hologramm umfasst,
wobei das Verfahren **gekennzeichnet ist durch** den folgenden Schritt:
- Durchführung einer homodynen Erfassung zwischen dem Signal, das aus dem genannten, von dem genannten Hologramm gebeugten Licht stammt, und mindestens einem Signal, das unter dem abgestrahlten Signal und dem von der genannten mindestens einen abstrahlenden Schicht übertragenen Signal gewählt wird.

**2.** Leseverfahren von in einem holographischen Material gespeicherten Daten gemäß Anspruch 1, bei dem die genannte homodyne Erfassung differentiell durchgeführt wird, wobei man das abgestrahlte Signal und das übertragene Signal verwendet.

**3.** Leseverfahren von in einem holographischen Material gespeicherten Daten gemäß Anspruch 1, bei dem ein zwischen dem holographischen Milieu und dem Spiegel angeordneter zweifach brechender Phasenfilter ermöglicht, den Funktionspunkt der genannten homodynen Erfassung zu optimieren, dank eines Polarisationswechsels des Lesestrahls in Bezug auf die Polarisation des Schreibstrahls.

4. Leseverfahren von in einem holographischen Material gespeicherten Daten gemäß Anspruch 1, bei dem ein zwischen dem holographischen Milieu und dem Spiegel angeordneter zweifach brechender Phasenfilter dank eines Polarisationswechsels des Lesestrahls in Bezug auf die Polarisation des Schreibstrahls ermöglicht, die genannte homodyne Erfassung differentiell durchzuführen zwischen den beiden Polarisationskomponenten der übertragenen und/oder abgestrahlten Strahlen.

Écriture
$\lambda_1, \lambda_2, .., \lambda_n$

Lecture
$\lambda_1, \lambda_2, .., \lambda_n$

Miroir (1)

Figure 1 (Art antérieur)

Figure 2

$A_i$   $A_s$

substrat

miroir

$l$

substrat

Figure 3

EP 1 829 031 B1

Figure 4

Figure 5

$$1 \quad 1 \quad 0 \quad 1 \quad 1$$
$$\underbrace{\lambda_1 + \lambda_2 + \phantom{0} + \lambda_2 + \lambda_2 +}\ldots$$

(5)

Figure 6

EP 1 829 031 B1

**EP 1 829 031 B1**

## RÉFÉRENCES CITÉES DANS LA DESCRIPTION

**Documents brevets cités dans la description**

- EP 0827621 A
- US 2002150022 A, Tolmachev
- US 2003165746 A, Stadler
- EP 1324322 A, Optware